# FASCICULE DE BREVET EUROPEEN

(11) **EP 0 695 900 B1**
(45) Date de publication et mention de la délivrance du brevet: **01.07.1998**
(21) Numéro de dépôt: 95401775.2
(22) Date de dépôt: 26.07.1995
(51) Int. Cl.: F16L 5/02, H02G 3/22

(54) **Passage étanche pour câble de télécommunications**
Dichter Durchgang für Fernmeldekabel
Sealed passage for telecommunication cables

(30) Priorité: 02.08.1994 FR 9409590
(43) Date de publication de la demande: 07.02.1996
(73) Titulaire: FRANCE TELECOM, 75015 Paris (FR)
(72) Inventeur: Crespel, Daniel, F-22300 Lannion (FR); Mahe, Thierry, F-22300 Rospez (FR); Cailleaux, Jean-Marc, F-22300 Lannion (FR)
(74) Mandataire: Armengaud Ainé, Alain

(56) Documents cités:
- EP-A- 0 175 236
- WO-A-93/15346
- DE-A- 3 833 370
- DE-C- 311 576
- DE-U- 9 208 255
- US-A- 2 493 556

## Description

La présente invention est relative à un passage étanche démontable traversé par un câble de télécommunications, en particulier à fibres optiques, permettant de réaliser selon la longueur de celui-ci des connexions, épissures ou autres liaisons externes avec des accessoires ou branchements, à connecter aux conducteurs du câble considéré.

De tels passages étanches, généralement enterrés ou placés en des endroits peu accessibles, sont usuellement réalisés au moyen d'un boîtier de raccordement, servant à assurer l'étanchéité entre deux éléments de câble opposés à réunir à l'intérieur de ce boîtier, notamment lorsque ces éléments de câble sont placés sous une pression d'un gaz donné, à maintenir immobilisés les conducteurs et en particulier les fibres optiques de ces éléments de câble à leurs entrées dans le boîtier, et à amarrer et bloquer en place ces éléments, en particulier lorsque ceux-ci comportent, avec les fibres optiques, des moyens indépendants de renforcement et de protection de la gaine du câble et un organe de support des fibres, conférant au câble une rigidité mécanique appropriée. Ce boîtier doit en outre permettre d'intervenir sur les câbles à diverses reprises, à des moments distincts dans le temps, avec à chaque fois ouverture puis fermeture du boîtier, ceci sans interrompre ou perturber le trafic des signaux acheminés par les fibres optiques.

Les solutions classiques ne sont pas satisfaisantes, tant en ce qui concerne l'étanchéité obtenue que l'immobilisation mécanique des conducteurs ou des fibres, ainsi que des moyens de renforcement et de support de ces câbles.

La présente invention a pour objet un passage étanche pour câble de télécommunications, dont la structure procure de nombreux avantages par rapport aux solutions classiques (voir, par exemple, WO-A- 93 15 346) dans lesquelles l'extrémité de l'élément de câble qui pénètre dans le boîtier est généralement logée dans un tube fendu, lequel reçoit une quantité appropriée d'une résine thermodurcissable, ce tube traversant un orifice de pénétration dans le boîtier formé de deux parties accolées l'une à l'autre, qui emprisonne entre elles, autour du tube un joint d'étanchéité.

Le passage étanche selon l'invention vise notamment à assurer une meilleure résistance de l'extrémité du câble pénétrant dans le boîtier vis-à-vis des efforts de flexion et de traction qui s'exercent sur lui, sans nuire à l'étanchéité du boîtier, tout en améliorant sa résistance au glissement par rapport à ce dernier. Le passage étanche proposé est par ailleurs facile à monter et à démonter, ne nécessite à cet effet aucune technicité particulière pour l'utilisateur et procure une étanchéité efficace, même pour des pressions élevées régnant à l'intérieur de la gaine du câble, pouvant atteindre jusqu'à 2 bars, cette étanchéité se maintenant égale à elle-même dans le temps.

L'invention, en évitant l'utilisation de blocs de résine coulés, dans un tube fendu classique, permet par ailleurs le remplacement facile du câble et également autorise l'emploi des boîtiers déjà existants, en réduisant par conséquent considérablement le prix de revient du passage étanche obtenu.

A cet effet, le passage étanche traversé par un câble de télécommunications considéré, comportant un boîtier formé de deux parties propres à être solidarisées mutuellement l'une contre l'autre, avec compression entre elles d'un joint plat d'étanchéité s'étendant selon un plan commun aux deux parties, celles-ci délimitant entre elles une région interne dans laquelle est introduite l'extrémité d'au moins un câble à travers un orifice d'accès prévu latéralement dans le boîtier entre les deux parties de celui-ci, se caractérise en ce qu'il comporte, entourant le câble et disposés selon la dimension longitudinale au droit de l'orifice, de l'extérieur vers l'intérieur du boîtier, un serre câble en au moins deux parties complémentaires emprisonnant le câble, un joint traversé par le câble, de préférence à section cylindrique, placé derrière le serre câble, et un organe presseur, également en au moins deux parties complémentaires, disposé entre le serre câble et le joint et appliqué contre la face postérieure de celui-ci, cet organe étant apte à exercer sur le joint de câble un effort axial par l'effet d'un organe de poussée prenant appui sur le serre câble.

De préférence, le joint de câble comporte deux lèvres latérales longitudinales, débordant de part et d'autre du joint, s'engageant entre les deux parties complémentaires du serre câble et disposées dans le plan commun contenant le joint plat d'étanchéité entre les deux parties du boîtier. En variante, le joint de câble comporte deux rainures latérales, diamétralement opposées, où s'engage le joint plat.

Avantageusement et selon une caractéristique particulière, le joint de câble comporte une fente longitudinale de séparation, de manière à permettre à ce joint de se placer autour du câble sans nécessiter de l'enfiler sur celui-ci. De préférence également, la fente longitudinale présente une partie en Ω pour faciliter la liaison des deux bords du joint, de part et d'autre de la fente de séparation.

Selon encore une autre caractéristique particulière, le serre câble, l'organe presseur et le joint de câble sont logés à l'intérieur d'une tubulure de guidage en deux parties, ouverte à ses extrémités et engagée dans l'orifice d'accès à l'intérieur du boîtier, cette tubulure comportant deux épaulements transversaux parallèles, en appui sur les faces opposées du boîtier, dirigées respectivement vers l'intérieur et l'extérieur de celui-ci, l'épaisseur du boîtier entre ces faces étant sensiblement égale à la longueur de la tubulure entre ses épaulements.

Avantageusement, une goupille transversale ou analogue, perpendiculaire à l'axe de la tubulure de guidage, solidarise celle-ci avec le serre câble, de manière à éviter sa rotation relative par rapport au boîtier.

Selon une autre variante de réalisation, le serre câble, l'organe presseur et le joint de câble sont logés dans une cavité ouverte ménagée dans l'épaisseur du boîtier, dont les fonds sont délimités par des faces parallèles contre lesquelles sont respectivement en appui le joint et le serre câble, l'une desdites faces vers l'extérieur du boîtier, constituant l'organe presseur du joint.

Conformément à une autre caractéristique du passage étanche considéré et quelle que soit la variante de réalisation envisagée, les deux parties complémentaires du serre câble sont rapprochées l'une vers l'autre pour immobiliser le câble par des vis de liaison, disposées dans des passages taraudés du serre câble s'étendant perpendiculairement à la direction du câble.

Selon encore une autre caractéristique, l'organe de poussée comporte au moins une vis traversant un alésage taraudé du serre câble, prévu parallèlement à la direction du câble et dont l'extrémité est appliquée sur l'organe presseur de façon à exercer sur celui-ci l'effort nécessaire pour un écrasement limité du joint à l'intérieur de l'orifice d'accès du boîtier.

Selon d'autres caractéristiques également du passage étanche de l'invention, le joint plat d'étanchéité du boîtier comporte une partie en forme d'anneau, disposé dans l'orifice d'accès à l'intérieur du boîtier recevant le câble, cet anneau entourant selon le cas la tubulure de guidage ou le joint de câble directement à l'intérieur de la cavité ouverte du boîtier.

Enfin, le serre câble, l'organe presseur et le joint cylindrique peuvent comporter une pluralité d'alésages pour le montage d'autant de câbles distincts, ces alésages présentant des directions axiales parallèles entre elles.

D'autres caractéristiques d'un passage étanche établi conformément à des modifications de l'invention, apparaîtront encore à travers la description qui suit de plusieurs exemples de réalisation, donnés à titre indicatif et non limitatif, en référence aux dessins annexés sur lesquels :
- La Figure 1 est une vue en perspective éclatée des diverses parties qui constituent un passage étanche réalisé conformément à un premier mode d'exécution de l'invention.
- La Figure 2 est une vue en coupe à plus grande échelle du passage étanche considéré par le plan qui sépare les deux parties du boîtier.
- La Figure 3 est une vue en coupe du passage illustré sur la Figure 2, selon la ligne III-III de cette dernière.
- La Figure 4 illustre une variante de réalisation, adaptée à un passage pour deux câbles parallèles l'un à l'autre.
- La Figure 5 illustre une autre variante pour quatre câbles parallèles.
- La Figure 6 est une vue en perspective d'une variante du joint cylindrique illustré sur la Figure 4.

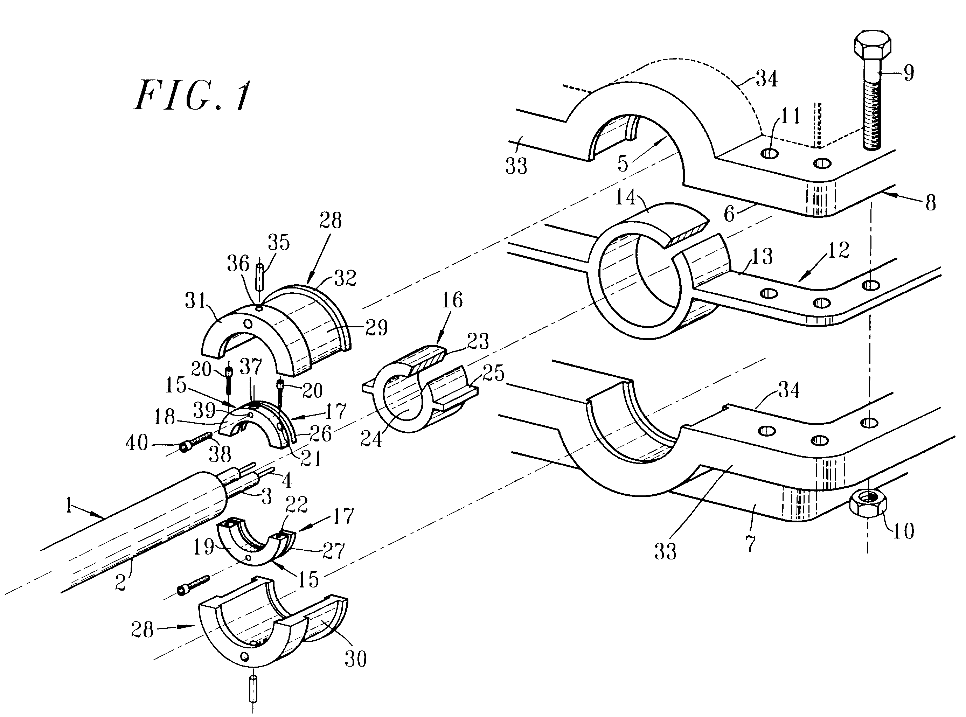

Dans l'exemple représenté sur les Figures 1 à 3, on a envisagé un passage étanche conforme à l'invention pour l'extrémité d'un câble 1, comportant de façon en elle-même connue une gaine externe 2, entourant un ensemble de conducteurs 3, dont en l'espèce et de préférence chacun est constitué par une fibre optique 4 unique, ou par plusieurs fibres disposées en ruban.

L'extrémité du câble 1 est prévue pour s'engager et s'immobiliser à l'intérieur d'un orifice d'accès 5, ménagé entre deux parties, respectivement 6 et 7, d'un boîtier 8, ces deux parties étant susceptibles de s'appliquer l'une contre l'autre avant d'être immobilisées dans cette position au moyen d'un ensemble de vis 9, bloquées par des écrous 10 après traversée de trous 11 ménagés dans les bords de ces deux parties 6 et 7.

Un joint plat d'étanchéité 12 est de préférence monté entre les deux parties 6 et 7 selon leur périphérie, et s'étend dans leur plan de jonction commun en s'appliquant contre les faces en regard de ces deux parties du boîtier. Dans l'exemple de réalisation représenté, le joint 12, en un matériau élastomère approprié du genre caoutchouc synthétique, comporte une partie courante 13 en forme de ruban et, au droit de l'orifice d'accès 5 par lequel l'extrémité du câble 1 pénètre à l'intérieur du boîtier, un anneau 14 épousant le contour de cet orifice.

Conformément à l'invention, l'immobilisation du câble vis-à-vis du boîtier dans l'orifice 5 et l'étanchéité du passage ainsi réalisé sont obtenues par la combinaison de trois pièces qui assurent ensemble les fonctions nécessaires pour obtenir le résultat recherché.

Ces trois pièces sont notamment constituées par un serre câble 15, un joint cylindrique d'étanchéité 16 et un organe presseur 17, ces trois éléments étant disposés autour du câble 1 à l'intérieur de l'orifice 5 de la manière suivante.

Le serre câble 15 est constitué de deux parties complémentaires, respectivement 18 et 19, propres à venir serrer le câble par l'extérieur de sa gaine 2, en étant rapprochées l'une de l'autre au moyen de vis de serrage 20 traversant l'une des pièces 18 à travers des trous épaulés 21 et venant engager leur extrémité filetée dans un alésage taraudé 22 de l'autre pièce 19, afin d'exercer sur ces deux pièces un effort de rapprochement jusqu'à blocage de la gaine avec une force ajustable, restant inférieure à celle qui risquerait de détériorer les fibres optiques 4 logées à l'intérieur du câble.

Le joint d'étanchéité 16 présente une forme générale cylindrique et avec un corps 23 et un évidement interne 24 pour le passage du câble 1. Le cas échéant, le joint 16 peut comporter dans sa surface externe des lèvres latérales 25, permettant de maintenir ce joint entre les deux parties complémentaires 18 et 19 du serre câble 15.

L'organe presseur 17 se présente sous la forme d'une rondelle métallique, également en deux parties 26 et 27, comme les parties 18 et 19 du serre câble 15, l'organe presseur étant logé autour du câble 1 entre ce serre câble et le joint 16 qui y fait suite.

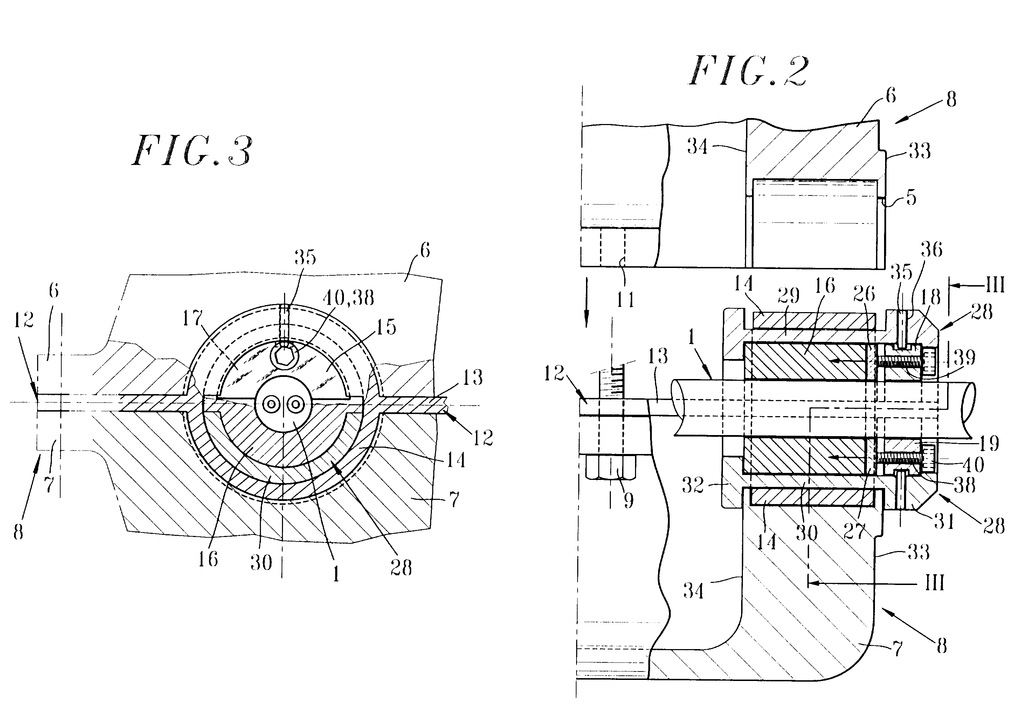

L'ensemble formé par le serre câble 15, le joint cylindrique 16 et l'organe presseur 17, est logé dans l'orifice d'accès 5 à l'intérieur du boîtier 8 par l'intermédiaire d'un élément de guidage 28, en forme de tubulure, à nouveau réalisé en deux parties, respectivement 29 et 30. Chacune de ces parties comporte à ses extrémités un épaulement plan, respectivement 31 et 32, apte à venir se disposer contre la face externe 33 d'une part, contre la face interne 34 d'autre part, de part et d'autre des extrémités de l'orifice d'accès 5 en s'appuyant ainsi sur les bords du boîtier, la distance qui sépare les épaulements 31 et 32 correspondant sensiblement à l'épaisseur de la paroi de ce boîtier, comme on le voit plus particulièrement sur la vue en coupe de la Figure 2.

Une goupille transversale 35 traverse un trou 36 de l'une 29 des deux parties de la tubulure 28 pour venir s'engager dans un trou de réception 37 prévu dans la pièce en regard 18 du serre câble 15, afin de solidariser celui-ci avec la tubulure et empêcher sa rotation relative par rapport au boîtier.

Enfin, l'équipement du passage étanche proposé se complète au moyen d'un organe de poussée, constitué par une ou plusieurs vis telles que 38, engagées dans un trou taraudé 39 en regard du serre câble 15, la commande de cette vis par l'intermédiaire de sa tête 40, permettant d'exercer sur le presseur 17 situé du côté opposé vis-à-vis du serre câble un effort réalisant une compression progressive du joint cylindrique 16, entre ce presseur et l'épaulement 32 de la tubulure 28 situé du côté opposé.

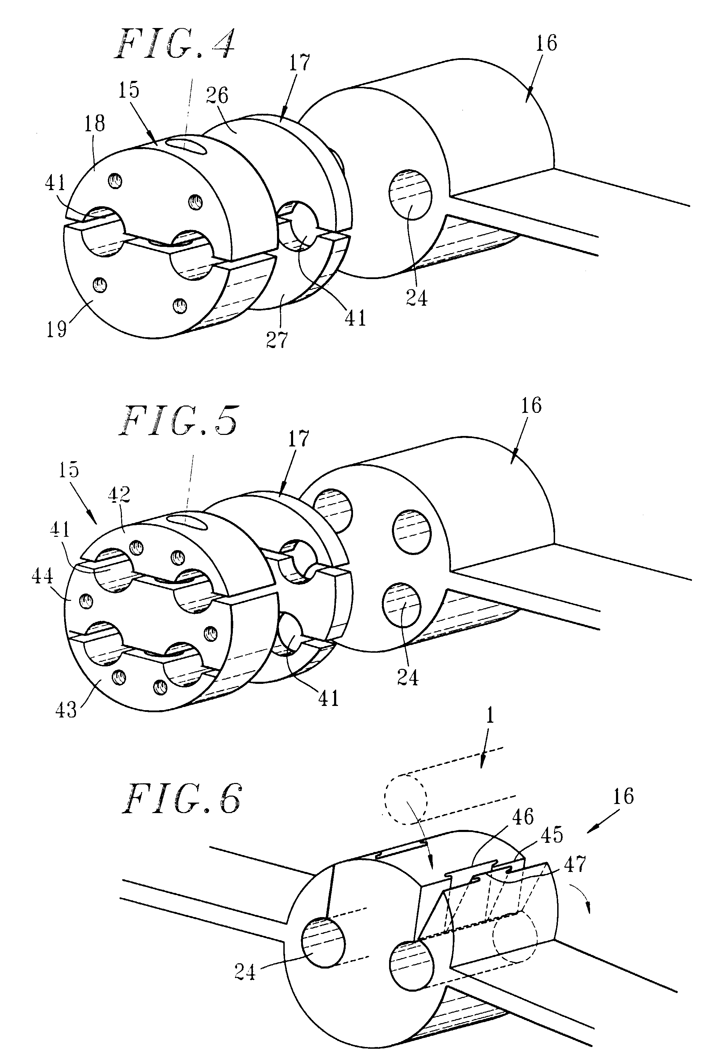

Dans l'exemple décrit ci-desus, le serre câble 15, le joint cylindrique 16 et l'organe presseur 17 sont réalisés de manière à permettre l'introduction à travers l'orifice d'accès 5 dans le boîtier 8 d'un câble unique. En variante et comme représenté sur la Figure 4, ces divers composants du passage étanche peuvent être conçus de manière à assurer la traversée de ce passage par deux câbles parallèles, les deux parties 18 et 19 du serre câble ou 26 et 27 du presseur comportant deux encoches hémi-cylindriques voisines 41 pour la réception de ces câbles séparément, le joint cylindrique 16 présentant deux évidements 24 en regard.

Dans une autre variante illustrée sur la Figure 5, les mêmes pièces sont cette fois prévues pour permettre le passage de quatre câbles parallèles, le serre câble 15 et l'organe presseur 17 étant ici réalisés en trois parties, respectivement 42 et 43 aux extrémités, de part et d'autre d'une partie centrale 44, chacune d'elles comportant comme dans la variante précédente des encoches hémi-cylindriques 41 traversées par ces câbles. De même, le joint cylindrique 16 présente dans ce cas quatre évidements 24 correspondants.

Dans toutes les variantes qui précèdent, le serre câble 15 et l'organe presseur 17 en plusieurs parties peuvent être aisément adaptées de part et d'autre du ou des câbles 1 à immobiliser de manière étanche lors de leur pénétration à l'intérieur du boîtier. En ce qui concerne en revanche, le joint cylindrique 16, celui-ci, s'il est formé d'un seul tenant, nécessite qu'il soit enfilé sur l'extrémité du câble, ce qui peut poser problèmme et notamment risque d'endommager les fibres optiques dépassant à celle-ci.

Pour pallier cet inconvénient, on peut avantageusement et comme représenté sur la Figure 6, ménager selon la direction longitudinale du joint, une ou plusieurs fentes 45, se prolongeant jusqu'aux évidements 24 réservés au passage de ces câbles, de manière à permettre d'ouvrir latéralement le joint, de monter le câble correspondant, puis de refermer en reconstituant le joint lui-même. Avantageusement, les bords en regard de chaque fente 45 présentent une encoche 46 pour l'un, une partie en saillie 47 pour l'autre, de préférence en n, afin de permettre de solidariser ces bords à la manière d'une boutonnière.

Bien entendu, il va de soi que l'invention ne se limite pas à l'exemple de réalisation plus spécialement décrit ci-dessus et représenté en référence aux dessins annexés. En particulier, on pourrait prévoir de supprimer la tubulure 28 et de ménager seulement dans l'épaisseur du boîtier 8 une cavité en creux pour loger le serre câble 15, le joint 16 et l'organe presseur 17, le serre câble et le joint étant maintenus entre les fonds opposés de cette cavité.

De même et dans d'autres variantes, on peut prévoir que le joint cylindrique 16 soit directement raccordé au joint plat 12 logé entre les deux parties du boîtier, en aménageant les côtés du joint de câble de telle sorte qu'ils présentent des rainures ou autres parties en creux permettant aux côtés du joint plat de s'y engager, en assurant la continuité de l'étanchéité nécessaire sur la périphérie de ce boîtier.

Selon le cas, le joint plat 12 du boîtier peut donc être solidaire ou séparé du joint de câble 16 ; en outre, ce dernier peut présenter une section différente, l'orifice d'accès 5 prévu entre les deux parties du boîtier pouvant être réalisé en "puits" dans l'une de ces parties, l'autre ayant la forme d'un couvercle plat fermant la partie supérieure de ce puits, cette solution ayant l'avantage d'éviter toute possibilité de rotation relative du câble immobilisé à l'intérieur du joint par rapport au boîtier. Dans ce cas également, le joint 12 disposé entre les deux parties de ce dernier, peut être réalisé autrement que sous la forme d'un ruban plat, par exemple avec une section torique ou prismatique.

Enfin, dans l'une quelconque des variantes proposées, on peut avantageusement prévoir que le boîtier recevant un ou plusieurs câbles, comporte également un ou plusieurs autres orifices d'accès non occupés par les extrémités de tels câbles, auquel cas chacun de ces passages peut être équipé d'un cimblot qui vient l'obturer temporairement et être facilement retiré pour laisser la place à un câble. complémentaire le moment venu.

Dans toutes les éventualités ci-dessus et quel que soit le mode d'exécution proposé, on réalise un passage étanche de conception très simple, dans lequel la fonction blocage du câble est dissociée de la fonction étanchéité, toutes les pièces du montage pouvant être séparées pour remplacement ou substitution d'un câble par un autre en conservant le même boîtier.

## Revendications

1. Passage étanche traversé par un câble de télécommunications, comportant un boîtier (8) formé de deux parties (6, 7) propres à être solidarisées mutuellement l'une contre l'autre, avec compression entre elles d'un joint plat (12) d'étanchéité s'étendant selon un plan commun aux deux parties, celles-ci délimitant entre elles une région interne dans laquelle est introduite l'extrémité d'au moins un câble (1) à travers un orifice d'accès (5) prévu latéralement dans le boîtier entre les deux parties de celui-ci, caractérisé en ce qu'il comporte, entourant le câble et disposés selon la dimension longitudinale au droit de l'orifice, de l'extérieur vers l'intérieur du boîtier, un serre câble (15) en au moins deux parties complémentaires (18, 19) emprisonnant le câble, un joint (16) traversé par le câble, de préférence à section cylindrique, placé derrière le serre câble, et un organe presseur (17), également en au moins deux parties complémentaires (26, 27), disposé entre le serre câble et le joint et appliqué contre la face postérieure de celui-ci, cet organe étant apte à exercer sur le joint de câble un effort axial par l'effet d'un organe de poussée (38) prenant appui sur le serre câble.

2. Passage étanche selon la revendication 1, caractérisé en ce que le joint de câble (16) comporte deux lèvres latérales (25), longitudinales, débordant de part et d'autre du joint, s'engageant entre les deux parties complémentaires (6, 7) du serre câble (15) et disposées dans le plan commun contenant le joint plat d'étanchéité (12) entre les deux parties (6, 7) du boîtier (8).

3. Passage étanche selon la revendication 1, caractérisé en ce que le joint plat d'étanchéité (12) du boîtier (8) s'engage dans des rainures latérales du joint de câble (16), de part et d'autre de celui-ci, dans le plan commun aux deux parties (6, 7) de ce boîtier.

4. Passage étanche selon l'une des revendications 2 ou 3, caractérisé en ce que le joint cylindrique (16) comporte une fente longitudinale (45) de séparation, de manière à permettre à ce joint de se placer autour du câble (1) sans nécessiter de l'enfiler sur celui-ci.

5. Passage étanche selon la revendication 4, caractérisé en ce que la fente longitudinale (45) présente une partie (46, 47) en Ω pour faciliter la liaison des deux bords du joint, de part et d'autre de la fente.

6. Passage étanche selon l'une quelconque des revendications 1 à 5, caractérisé en ce que le serre câble (15), l'organe presseur (17) et le joint de câble (16) sont logés à l'intérieur d'une tubulure de guidage (28) en deux parties (29, 30), ouverte à ses extrémités et engagée dans l'orifice d'accès (5) à l'intérieur du boîtier (8), cette tubulure comportant deux épaulements transversaux parallèles (31, 32), en appui sur les faces opposées (33, 34) du boîtier, dirigées respectivement vers l'intérieur et l'extérieur de celui-ci.

7. Passage étanche selon la revendication 6, caractérisé en ce qu'une goupille transversale (35) ou analogue, perpendiculaire à l'axe de la tubulure de guidage (28), solidarise celle-ci avec le serre câble (15), de manière à éviter sa rotation relative par rapport au boîtier (8).

8. Passage étanche selon la revendication 1, caractérisé en ce que le serre câble (15), l'organe presseur (17) et le joint de câble (16) sont logés dans une cavité ouverte ménagée dans l'épaisseur du boîtier, dont les fonds sont délimités par des faces parallèles contre lesquelles sont respectivement en appui le joint et le serre câble, l'une desdites faces vers l'extérieur du boîtier, constituant l'organe presseur du joint.

9. Passage étanche selon l'une quelconque des revendications 1 à 8, caractérisé en ce que les deux parties (18, 19) complémentaires du serre câble (15) sont rapprochées l'une vers l'autre pour immobiliser le câble (1) par des vis de liaison (20), disposées dans des passages taraudés (22) du serre câble s'étendant perpendiculairement à la direction du câble.

10. Passage étanche selon l'une quelconque des revendications 1 à 9, caractérisé en ce que l'organe de poussée comporte au moins une vis (38) traversant un alésage taraudé (39) du serre câble (15), prévu parallèlement à la direction du câble et dont l'extrémité est appliquée sur l'organe presseur (17) de façon à exercer sur celui-ci l'effort nécessaire pour un écrasement limité du joint (16) à l'intérieur de l'orifice d'accès (5) du boîtier (8).

11. Passage étanche selon l'une quelconque des revendications 1 à 10, caractérisé en ce que le joint plat d'étanchéité (12) du boîtier (8) comporte une partie en forme d'anneau (14), disposé dans l'orifice d'accès (5) à l'intérieur du boîtier recevant le câble (1).

12. Passage étanche selon l'une quelconque des revendications 1 à 11, caractérisé en ce que le serre câble (15), l'organe presseur (17) et le joint cylindrique (16) comportent une pluralité d'alésages (41, 24) pour le montage d'autant de câbles (1) distincts, ces alésages présentant des directions axiales parallèles entre elles.

## Patentansprüche

1. Dichter Durchgang für ein Fernmeldekabel mit einem Gehäuse (8), das aus zwei Teilen (6, 7) gebildet ist, die gegeneinander gesetzt fest verbunden werden können, wobei zwischen ihnen eine flache Dichtung (12) zusammengepreßt wird, die sich in einer den beiden Teilen gemeinsamen Ebene erstreckt, wobei diese Teile zwischen sich einen Innenbereich begrenzen, in den das Ende von mindestens einem Kabel (1) durch eine seitlich im Gehäuse zwischen dessen zwei Teilen vorgesehene Zugangsöffnung (5) eingeführt wird, **dadurch gekennzeichnet, daß** er rings um das Kabel und in dessen Längsdimension im Bereich der Öffnung von außen zum Inneren des Gehäuses hin eine Kabelklemme (15), die aus mindestens zwei komplementären Teilen (18, 19) besteht, die das Kabel einspannen, eine vom Kabel durchsetzte Dichtung (16), vorzugsweise mit im ganzen zylindrischer Form, die hinter der Kabelklemme angeordnet ist, und ein ebenfalls aus zwei komplementären Teilen (26, 27) bestehendes Preßelement (17) aufweist, das zwischen der Kabelklemme und der Dichtung angeordnet ist und gegen deren hintere Fläche anliegt, wobei dieses Preßelemenet unter der Wirkung eines Schubelements (38), das sich an der Kabelklemme abstützt, eine axiale Kraft auf die Kabeldichtung ausüben kann.

2. Dichter Durchgang nach Anspruch 1, **dadurch gekennzeichnet, daß** die Kabeldichtung (16) zwei seitliche Zungen (25) aufweist, die sich in Längsrichtung erstrecken, beiderseits der Dichtung vorstehen, sich zwischen die zwei komplementären Teile (6, 7) der Kabelklemme (15) erstrecken und in der gemeinsamen Ebene angeordnet sind, welche die flache Dichtung (12) zwischen den zwei Teilen (6, 7) des Gehäuses (8) enthält.

3. Dichter Durchgang nach Anspruch 1, **dadurch gekennzeichnet, daß** die flache Dichtung (12) des Gehäuses (8) in seitliche Nuten der Kabeldichtung (16) beiderseits derselben in der den zwei Teilen (6, 7) dieses Gehäuses gemeinsamen Ebene eingreift.

4. Dichter Durchgang nach einem der Ansprüche 2 oder 3, **dadurch gekennzeichnet, daß** die zylindrische Dichtung (16) einen Längsschlitz (45) aufweist, der sie durchtrennt, so daß diese Dichtung um das Kabel (1) gelegt werden kann, ohne daß sie auf dieses aufgeschoben werden muß.

5. Dichter Durchgang nach Anspruch 4, **dadurch gekennzeichnet, daß** der Längsschlitz (45) einen Ω-förmigen Teil (46, 47) aufweist, um das Verbinden der zwei Ränder der Dichtung beiderseits des Schlitzes zu erleichtern.

6. Dichter Durchgang nach einem der Ansprüche 1 bis 5, **dadurch gekennzeichnet, daß** die Kabelklemme (15), das Preßelement (17) und die Kabeldichtung (16) im Inneren eines aus zwei Teilen (29, 30) bestehenden Führungsrohrs (28) sitzen, das an seinen Enden offen ist und in die Eingangsöffnung (5) zum Inneren des Gehäuses (8) eingesetzt ist, wobei dieses Rohr zwei parallele Querschultern (31, 32) aufweist, die gegen die gegenüberliegenden Flächen (33, 34) des Gehäuses, die jeweils zum Inneren und Äußeren desselben gerichtet sind, anliegen.

7. Dichter Durchgang nach Anspruch 6, **dadurch gekennzeichnet, daß** ein Querstift (35) oder dergleichen senkrecht zur Achse des Führungsrohrs (28) dieses mit der Kabelklemme (15) so fest verbindet, daß deren relative Drehung bezüglich des Gehäuses (8) verhindert wird.

8. Dichter Durchgang nach Anspruch 1, **dadurch gekennzeichnet, daß** die Kabelklemme (15), das Preßelement (17) und die Kabeldichtung (16) in einem in der Dicke des Gehäuses ausgebildeten offenen Hohlraum sitzen, dessen Böden durch parallele Flächen begrenzt sind, gegen welche jeweils die Dichtung und die Kabelklemme anliegen, wobei die eine dieser Flächen, die zum Äußeren des Gehäuses gerichtet ist, das Preßelement der Dichtung bildet.

9. Dichter Durchgang nach einem der Ansprüche 1 bis 8, **dadurch gekennzeichnet, daß** die zwei komplementären Teile (18, 19) der Kabelklemme (15) zum Einspannen des Kabels (1) einander durch Verbindungsschrauben (20) angenähert werden, die in Gewindebohrungen (22) der Kabelklemme ausgebildet sind und sich senkrecht zur Kabelrichtung erstrecken.

10. Dichter Durchgang nach einem der Ansprüche 1 bis 9, **dadurch gekennzeichnet, daß** das Schubelement mindestens eine Schraube (38) aufweist, welche eine Gewindebohrung (39) der Kabelklemme (15) durchsetzt, die parallel zur Kabelrichtung vorgesehen ist, wobei das Ende der Schraube gegen das Preßelement (17) so andrückt, daß es auf dieses den notwendigen Druck ausübt, um eine begrenzte Stauchung der Dichtung (16) im Inneren der Eingangsöffnung (5) des Gehäuses (8) zu erreichen.

11. Dichter Durchgang nach einem der Ansprüche 1 bis 10, **dadurch gekennzeichnet, daß** die flache Dichtung (12) des Gehäuses (8) einen ringförmigen Teil (14) aufweist, der in der Eingangsöffnung (5) zum Inneren des Gehäuses angeordnet ist, die das Kabel (1) aufnimmt.

12. Dichter Durchgang nach einem der Ansprüche 1 bis 11, **dadurch gekennzeichnet, daß** die Kabelklemme (15), das Preßelement (17) und die zylindrische Dichtung (16) eine Mehrzahl von Bohrungen (41, 24) für die Montage der entsprechenden Anzahl gesonderter Kabel (1) aufweist, wobei die axialen Richtungen dieser Bohrungen zueinander parallel sind.

## Claims

1. Impermeable duct, for the passage of a telecommunications cable, comprising a housing (8) made of two sections (6, 7) which can be connected together, pressing between them a sealing gasket (12) which extends in a common plane with the two sections, the latter delimiting between them an internal region into which the end of at least one cable (1) is inserted through an access opening (5) provided on the side of the housing between the two sections of the latter, characterised in that it comprises components surrounding the cable and disposed in longitudinal direction at the opening, from the exterior to the interior of the housing, namely a cable clamp (15) made of at least two complementary sections (18, 19) enclosing the cable, a seal (16) passed through by the cable, preferably cylindrical in cross section, positioned behind the cable clamp, and a pressing means (17), also made of at least two complementary sections (26, 27), arranged between the cable clamp and the seal and applied to the rear face of the latter, said means being capable of exerting on the cable seal an axial force by pushing means (38) acting on the cable clamp.

2. Impermeable duct according to Claim 1, characterised in that the cable seal (16) comprises two longitudinal, lateral lips (25) extending on either side of the seal, engaging between the two complementary sections (6, 7) of the cable clamp (15) and arranged in the common plane containing the sealing gasket (12) between the two sections (6, 7) of the housing (8).

3. Impermeable duct according to Claim 1, characterised in that the sealing gasket (12) of the housing (8) engages with the lateral grooves of the cable seal (16) on both sides thereof, in the common plane of two sections (6, 7) of said housing.

4. Impermeable duct according to one of Claims 2 or 3, characterised in that the cylindrical seal (16) comprises a longitudinal separating slot (45) in order to enable the seal to be placed around the cable (1) without making it necessary to thread the latter through the seal.

5. Impermeable duct according to Claim 4, characterised in that the longitudinal slot (45) has an Ω-shaped section (46, 47) to assist the connection of both seal edges on both sides of the slot.

6. Impermeable duct according to any one of Claims 1 to 5, characterised in that the cable clamp (15), the pressing means (17) and the cable seal (16) are mounted inside a guiding sleeve (28) comprising two sections (29, 30), which is open at the ends and is engaged with the access opening (5) on the inside of the housing (8), said sleeve comprising two parallel transverse shoulders (31, 32), resting against the opposite faces (33, 34) of the housing and directed respectively towards the interior and the exterior of the latter.

7. Impermeable duct according to Claim 6, characterised in that a transverse pin (35) or the like, perpendicular to the axis of the guiding sleeve (28), connects the latter with the cable clamp (15), in such a way as to avoid its rotation relative to the housing (8).

8. Impermeable duct according to Claim 1, characterised in that the cable clamp (15), the pressing means (17) and the cable seal (16) are mounted in an open cavity in the depth of the housing, the bases of which are delimited by parallel faces to which the seal and the cable clamp are connected respectively, one of said faces towards the exterior of the housing constituting the pressing means of the seal.

9. Impermeable duct according to any one of Claims 1 to 8, characterised in that the two complementary sections (18, 19) of the cable clamp (15) are joined together to immobilise the cable (1) by means of connecting screws (20) positioned in the threaded passages (22) of the cable clamp perpendicular to the direction of the cable.

10. Impermeable duct according to any one of Claims 1 to 9, characterised in that the pushing means comprises at least one screw (38) passing through a threaded bore (39) of the cable clamp (15) that is parallel to the direction of the cable and one end of which is applied against the pressing means (17) in such as way as to exert on the latter the necessary force to produce a limited deformation of the seal (16) on the inside of the access opening (5) of the housing (8).

11. Impermeable duct according to any one of Claims 1 to 10, characterised in that the sealing gasket (12) of the housing (8) comprises a ring-shaped section (14), arranged in the access opening (5) on the inside of the housing receiving the cable (1).

12. Impermeable duct according to any one of Claims 1 to 11, characterised in that the cable clamp (15), the pressing means (17) and the cylindrical seal (16) comprise a plurality of bores (41, 24) for the insertion of as many different cables (1), said bores being axially parallel to one another.
